# EUROPEAN PATENT APPLICATION

(11) **EP 1 637 725 A2**
(43) Date of publication of application: **22.03.2006**
(21) Application number: 05380194.0
(22) Date of filing: 12.09.2005
(51) Int. Cl.: F02K 3/077, F02C 6/02, F02C 6/20

(54) **Turbofan or turbojet arrangements for vehicles craft, aircraft and the like**

(30) Priority: 15.09.2004 ES 200402306; 18.08.2005 ES
(71) Applicant: Munoz Saiz, Manuel, 04004 Almeria (ES)
(72) Inventor: Munoz Saiz, Manuel, 04004 Almeria (ES)

(57) **Abstract**

A turbofan or turbojet arrangement for vehicles, craft, aircraft and the like, that comprises the installation of two or more gas turbines, mini-turbines, micro-turbines or nanoturbines grouped in parallel to form a single gondola and allowing for different configurations, to form a large, single turbine.

## Description

### FIELD OF THE INVENTION.-

To drive vehicles, craft, aircraft and the like.

### STATE OF THE ART.-

At present, large turbines are used whose performance is limited and less reliable due to their limitations. The following invention reduces or improves this.

### DESCRIPTION OF THE INVENTION.-

The turbofan or turbojet arrangement for vehicles, craft, aircraft and the like in the invention involves the installation of two or more gas turbines, mini-turbines, micro-turbines or nanoturbines grouped in parallel to form a single gondola and allowing for different configurations, based essentially on the concomitant simultaneous juxtaposition of said turbines, mini-turbines, micro-turbines and nanoturbines to form a large, single turbine which magnifies the vehicles' specifications, such as power, height, speed, range, etc.

In turn, each vehicle can carry several of these gondolas or turbines, mini-turbines, etc., groups.

The turbine, mini-turbine, etc., are secured together by their housings and associated studs or screws, and a single surrounding lateral fairing can be added. In addition to the circular fairing on the turbines, mini-turbines, etc., and their fans, they can be covered by just one fairing.

Although the number of gas turbines, mini-turbines, etc., to be used by each group is variable, most typically between 4 and 10 are used.

The gas turbines, mini-turbines, etc. are not only independent and produce thrust, lubrication, electricity, hydraulic and air pressure, but can also drive motor-pumps, compressors, generators, etc. independent of those turbines, mini-turbines, etc.,. Thus the turbines, mini-turbines, etc., can be used complete or without their fans, electrical generators, or hydraulic or oil pumps.

In such cases, change of turbines, mini-turbines, etc., due to failure, or for maintenance, etc., is extremely rapid.

By centralising the turbines, mini-turbines, etc., rotation using a planetary reducer system or the like, a single large fan can be driven.

Some or all of the turbines, mini-turbines, etc., can be tiltable.

Flow reversers and deflectors may be added.

A rapid dismantling system may be provided.

Layout may be such as to form the rear, front or cross shape of a fuselage or thrust, lubrication, electricity, hydraulic and air pressure, but can also drive motor-pumps, compressors, generators, etc. independent of those turbines, mini-turbines, etc.,. Thus the turbines, mini-turbines, etc., can be used complete or without their fans, electrical generators, or hydraulic or oil pumps.

In such cases, change of turbines, mini-turbines, etc., due to failure, or for maintenance, etc., is extremely rapid.

By centralising the turbines, mini-turbines, etc., rotation using a planetary reducer system or the like, a single large fan can be driven.

Some or all of the turbines, mini-turbines, etc., can be tiltable.

Flow reversers and deflectors may be added.

A rapid dismantling system may be provided.

Layout may be such as to form the rear, front or cross shape of a fuselage or profile required, with a given number of such turbines, mini-turbines, etc.; this will be done mainly with a peripheral or cross-section circular, oval, rectangular or segmented and can use also arch form.

Running half the turbines, mini-turbines, etc., or their fans in one direction and the other half in the opposite direction eliminates the rotation torque created in existing turbines. With a large common fan, flow straighteners can be used, or for the different groups' fans to run in the opposite direction.

During cruising flight and particularly at the end of a flight, when weight is reduced, some of these turbines, mini-turbines, etc., can be stopped, leading to financial savings, and their rate can also be reduced.

For circular crown layouts, the central area can be used for other functions, such as an aircraft fuselage.

Advantages: Increased performance and power and, consequently, increased altitude capacity, speed, reduced costs, increased reliability, in case of failure the whole is hardly affected, rotary torque is eliminated, they are very economical, and easy to replace or repair.

### BRIEF DESCRIPTION OF THE DRAWINGS

Fig. 1 shows a frontal schematic view of the arrangement in the invention.
Fig. 2 shows a rear schematic view of the arrangement in the invention.
Fig. 3 shows a frontal schematic view of a variant of the arrangement.
Fig. 4 shows a top schematic view of a variant of the arrangement.
Fig. 5 shows a side schematic view of the arrangement shown in figure 1.
Fig. 6 shows a rear schematic view of a variant of the arrangement.
Fig. 7 shows a frontal schematic view of a variant of the arrangement.
Fig. 8 shows a partial perspective schematic view of a gear reducer.
Fig. 9 to 14 show frontal and partial schematic views of different nacelles.
Fig. 15 shows a side partial schematic view of another variant of the arrangement.
Fig. 16 shows a rear schematic view of a variant of the arrangement.
Fig. 17 to 21 show a frontal and partial schematic views of different nacelles.

### MORE DETAILLED DESCRIPTION OF THE INVENTION

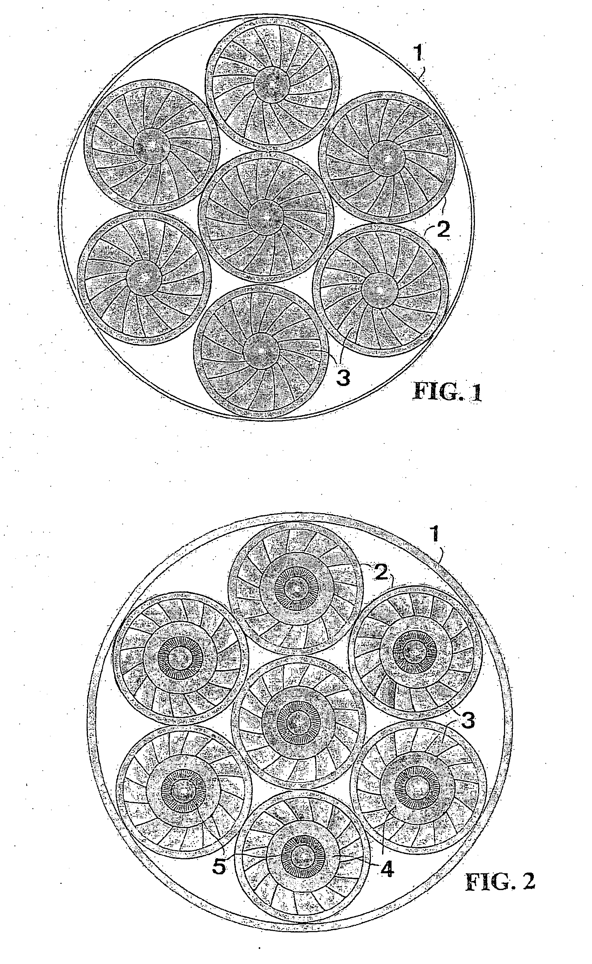

Figure 1 shows the cowl (1), turbines, mini-turbines, micro-turbines or nanoturbines (2) and their fans (3). It shows a circular arrangement with seven turbines, microturbines, etc. three running in one direction and the other four in the opposite direction. The fairing is standard, each turbine, miniturbine, etc. with its fan.
Figure 2 shows the cowl (1), turbines, mini-turbines, micro-turbines or nanoturbines (2) and their fans (3), nacelles of the turbines, micro-turbines, etc., (4) and the turbines blades (5). It shows the rear view of the arrangement shown in figure 1.

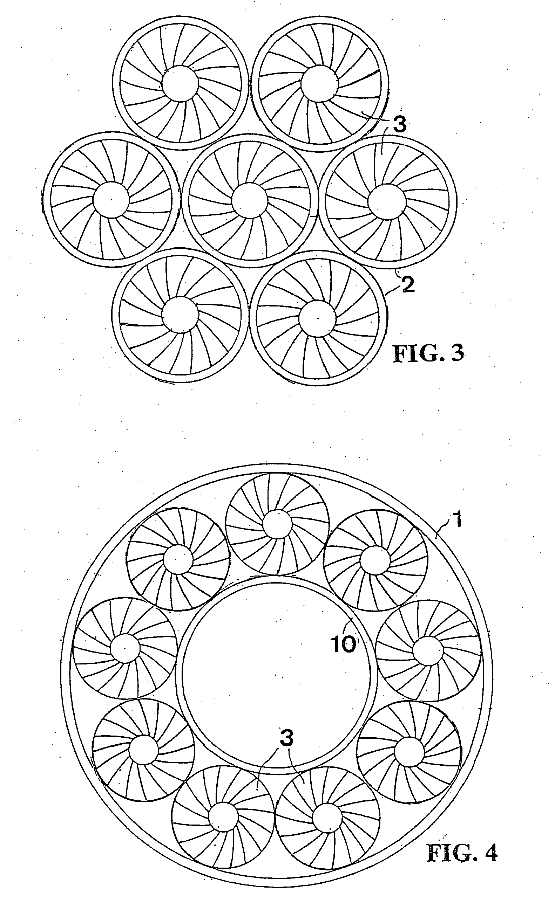

Figure 3 shows the turbines, microturbines, etc. (2) and their fans (3). They use individual cowls.
Figure 4 shows the external common single lateral fairing of the fans (1), the fans (3) and the internal lateral fairing (10). It uses a circular crown arrangement.

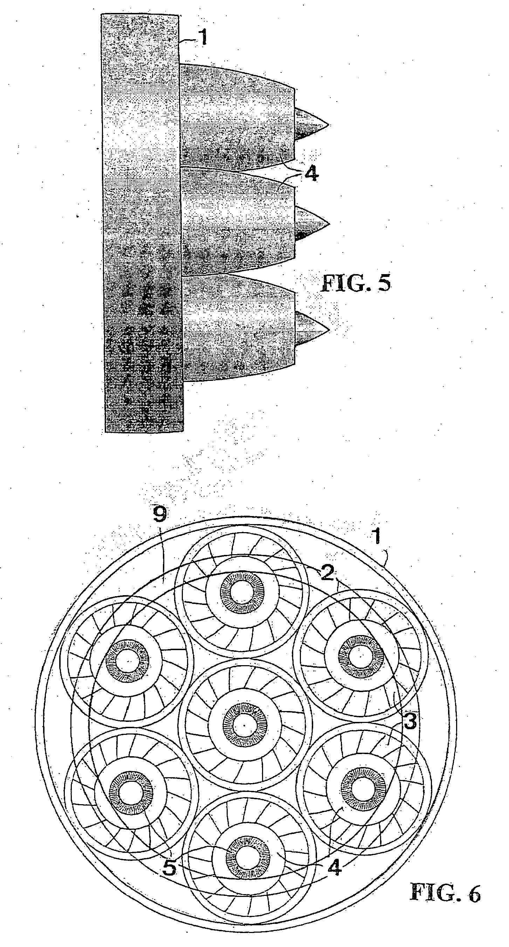

Figure 5 shows the external fairing of the fans (1), the nacelles of the turbines, microturbines, etc. It shows a side view of the arrangement shown in figure 1.
Figure 6 shows a rear view of the cowl (1), turbines, mini-turbines, micro-turbines, etc. (2), their fans (3), nacelle of the turbines, micro-turbines, etc. (4), turbine blades (5) etc. And a cowl that cover the nacells of the turbines, micro-turbines, etc.

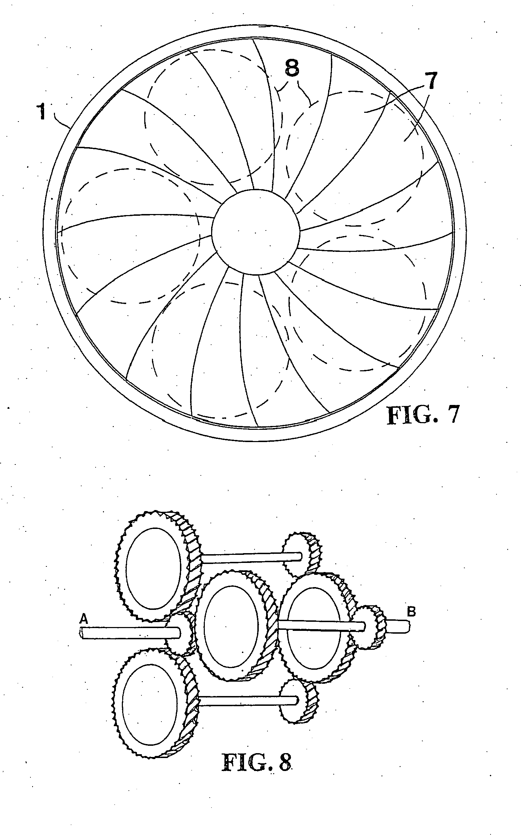

Figure 7 shows the cowl (1) of the turbines (8) and blades of the fan (7). It is of the single, big fan, in this case the turbines, micro-turbines, etc. do not use their fans.
Figure 8 is a portion of the gear reducer system which uses a planetary gear.

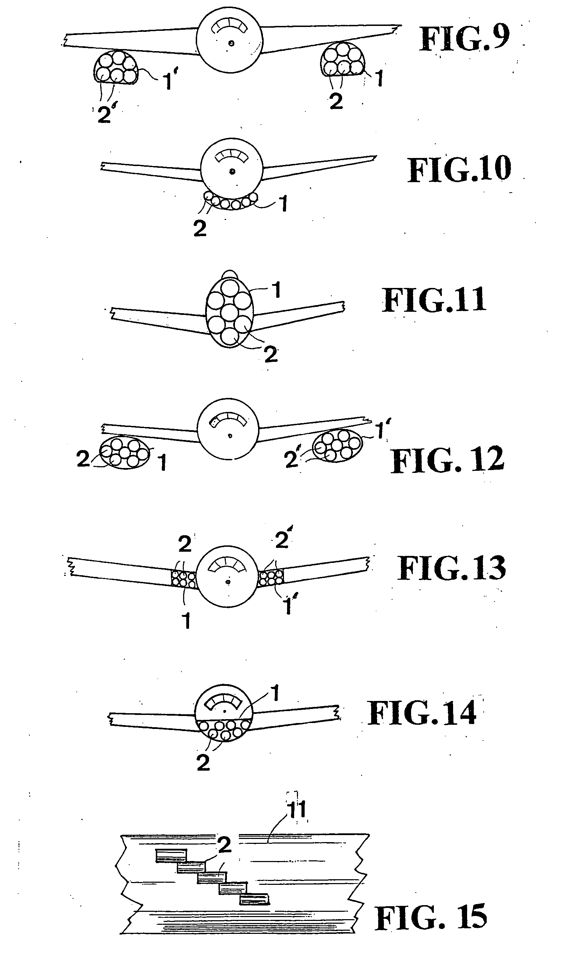

Figure 9 show nacelles whose cross-section is in the form of a segment (1 and 1') and turbines (2 and 2').
Figure 10 shows a group of nacelles whose cross-section is in the form of an arch (1) and the turbines (2).
Figure 11 and 12 shows a group of nacelles whose cross-section is in the form of an oval (1) and the turbines (2 and 2').
Figure 13 shows a group of nacelles whose cross-section is rectangular (1 and 1') and the turbines (2 and 2').
Figure 14 shows a group of nacelles whose cross-section is in the form of a segment (1) and the turbines (2).
Figure 15 shows a portion of fuselage (11) and the turbines (2) arranged stepped.

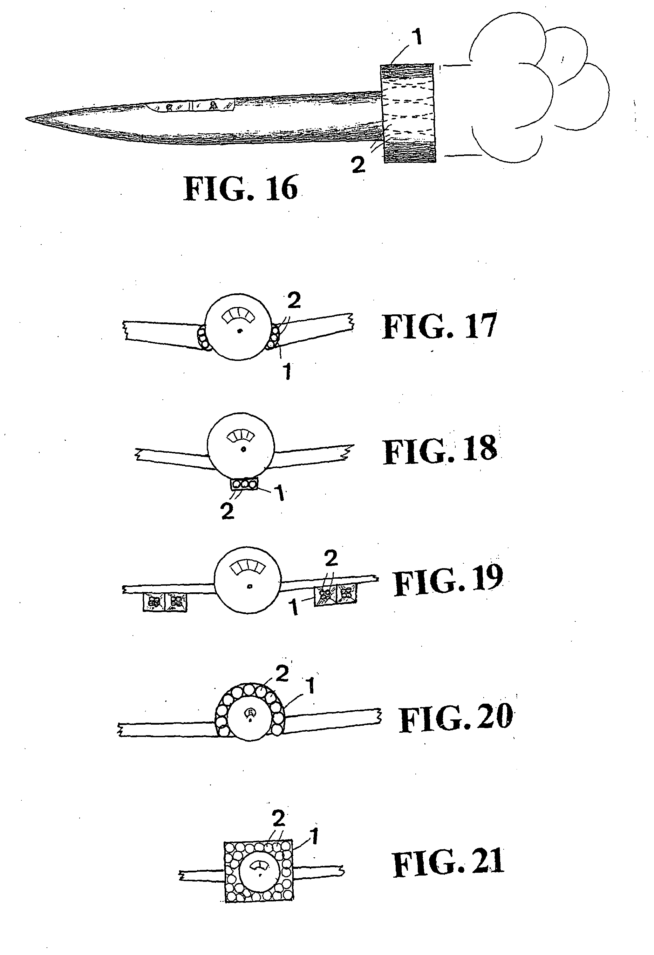

Figure 16 consists of a group of nacelles (1) of the circular crown type with the fuselage inside and the turbines, micro-turbines, etc. (2).
Figure 17 shows a group of nacelles whose cross-section is the form of side archs (1) and the turbines (2).
Figure 18 shows a group of nacelles whose cross-section is rectangular in the lower zone of the fuselage (1) and the turbines (2).
Figure 19 shows a group of nacelles arranged bellow the wings and whose cross-sectio is rectangular and the turbines (2).
Figure 20 shows a group of nacelles whose cross-section is in the form of an arch of circular crown (1) and the turbines (2).
Figure 21 shows a group of nacelles whose cross-section is squared (1) and are arranged around the fuselage, and the turbines (2).

## Claims

1. A turbofan or turbojet arrangement for vehicles, craft, aircraft and the like, that comprises the installation of two or more gas turbines, mini-turbines, micro-turbines or nanoturbines grouped in parallel to form a single gondola and allowing for different configurations, to form a large, single turbine.

2. The turbofan or turbojet according to claim 1, wherein each vehicle can carry several of these gondolas or turbine, mini-turbine, etc., groups.

3. The turbofan or turbojet according to claim 1, wherein the turbines, mini-turbines, etc., are secured together by their housings and associated studs or screws, and a single surrounding lateral fairing is added.

4. The turbofan or turbojet according to claim 1, wherein the turbines, mini-turbines, etc., and their fans, are covered by just one fairing.

5. The turbofan or turbojet according to claim 1, wherein the gas turbines, mini-turbines, etc., are independent and produce thrust, lubrication, electricity, hydraulic and air pressure.

6. The turbofan or turbojet according to claim 1, wherein the gas turbines, miniturbines, etc., can also drive motor-pumps, compressors, generators, etc. independent of those turbines, mini-turbines, etc.

7. The turbofan or turbojet according to claim 1, wherein centralising the turbines, mini-turbines, etc., rotation using a planetary reducer system or the like, a single large fan can be driven.

8. The turbofan or turbojet according to claim 1, wherein the turbines, mini-turbines, etc., are tiltable.

9. The turbofan or turbojet according to claim 1, wherein flow reversers and deflectors are added.

10. The turbofan or turbojet according to claim 1, wherein the layout is such as the front shape or the cross section of a fuselage or profile required, with a given number of such turbines, mini-turbines, etc.

11. The turbofan or turbojet according to claim 1, wherein layaut is such that adopts the rear shape of a fuselage, with a given number of said turbines, microturbines, etc.

12. The turbofan or turbojet according to claim 1, wher half the turbines, mini-turbines, etc., or their fans running in one direction and the other half in the opposite direction.

13. The turbofan or turbojet according to claim 1, wherein a large common fan and flow straighteners are used.

14. The turbofan or turbojet according to claim 1, wherein the turbines, mini-turbines, etc., have a circular cross-section.

15. The turbofan or turbojet according to claim 1, wherein the turbines, mini-turbines, etc., have a circular crown cross-section.

16. The turbofan or turbojet according to claim 1, wherein the turbines, mini-turbines, etc., have an oval cross-section.

17. The turbofan or turbojet according to claim 1, wherein the turbines, mini-turbines, etc., have a rectangular cross-section.

18. The turbofan or turbojet according to claim 1, wherein the turbines, mini-turbines, etc., have a segment cross-section.

19. The turbofan or turbojet according to claim 1, wherein the turbines, mini-turbines, etc., have an arch cross-section.

20. The turbofan or turbojet according to claim 1, wherein the turbines, mini-turbines, etc., are arranged in different steps.

21. The turbofan or turbojet according to claim 15, wherein the central area of the circular crown formed with this turbines is used to place the vehicle fuselage.

22. The turbofan or turbojet according to claim 1, wherein the turbines, mini-turbines, etc., has a segment of circular crown cross-section surrounded with a portion of fuselage.

23. The turbofan or turbojet according to claim 1, wherein the turbines, mini-turbines, etc., whose croos-section is squared and surrounds the fuselage.
